(19) Europäisches Patentamt
European Patent Office
Office européen des brevets

(11) EP 2 565 883 A1

# (12) EUROPEAN PATENT APPLICATION

(43) Date of publication:
**06.03.2013 Bulletin 2013/10**

(51) Int Cl.:
***H01F 38/02*** *(2006.01)* ***H02M 3/158*** *(2006.01)*

(21) Application number: **11179872.4**

(22) Date of filing: **02.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **University College Cork**
**Cork City (IE)**

(72) Inventors:
- **Hayes, John G.**
**Kinsale (IE)**
- **Hartnett, Kevin J.**
**County Cork (IE)**
- **Rylko, Marek**
**Cork (IE)**

(74) Representative: **Lucey, Michael**
**PURDYLUCEY**
**Intellectual Property**
**Suite 138-139**
**The Chapel Building**
**Mary's Abbey**
**Dublin 7 (IE)**

## (54) A split winding transformer

(57) The invention describes an integrated magnetic structure, for use in a transformer coupled buck and/or boost converter, comprising a core having at least one leg portion and at least one phase winding split into two sub-windings, said two sub-windings are wound around the core and adapted to function as a single phase of a transformer. The magnetic core is adapted such that the two sub-windings are positioned close to two sub-windings of another phase of the transformer. A CCTT split winding integrated magnetic (IM) structure is also described.

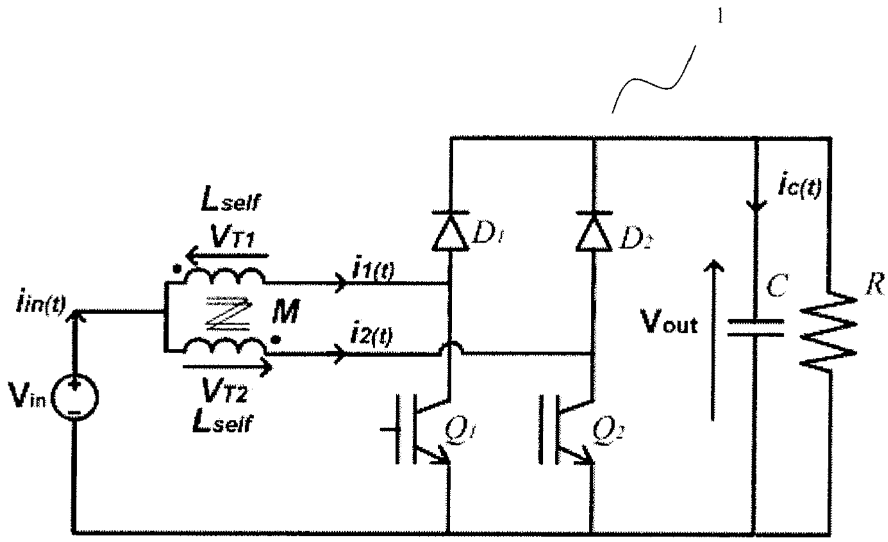


Figure 3



Printed by Jouve, 75001 PARIS (FR)

(Cont. next page)

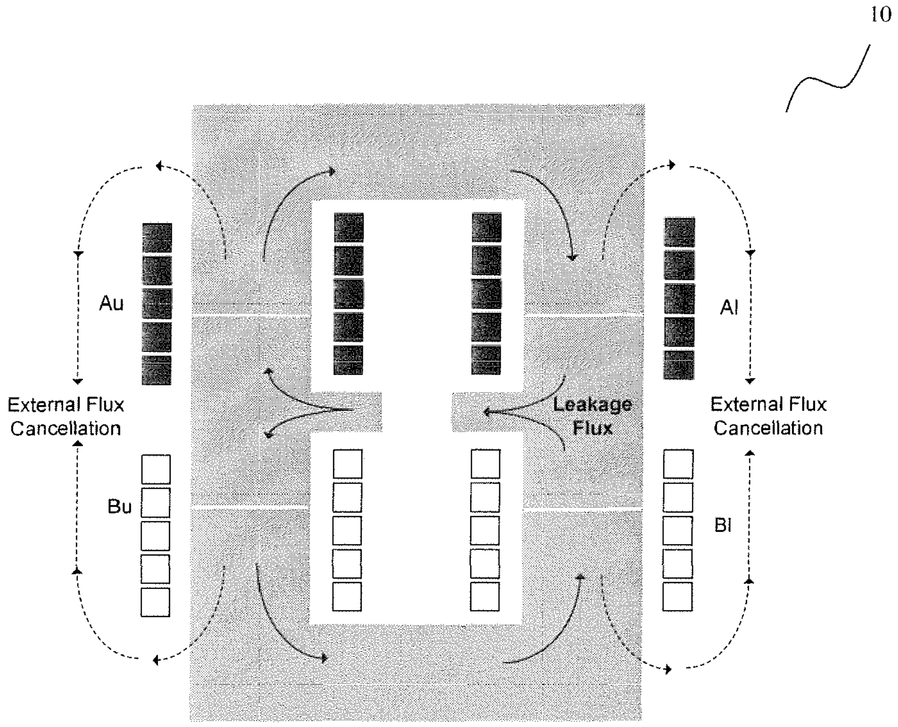
10
Au
Al
External Flux
Cancellation
Leakage
Flux
External Flux
Cancellation
Bu
Bl

**Figure 8**

## Description

### Field of the Invention

The invention relates to a split winding transformer. In particular the invention relates to a Split-Winding Integrated Magnetic (SWIM) structure for the transformer-coupled interleaved Buck and Boost converter family.

### Background to the Invention

High power density magnetic components are required for numerous power converter applications, for example electronic, military, aerospace and automotive applications. Compact and efficient design of magnetic devices is needed to reduce the weight and volume of switch-mode power converters. The magnetic components in the conventional poly-phase boost converter can be quite bulky and costly. Therefore, innovative methods to reduce magnetic component size, loss, and in turn, cost are major driving forces in the design of dc-dc, ac-dc or dc-ac converters.

Buck and boost converters are used in many applications to condition the power in dc-dc, ac-dc or dc-ac converters. An example of an automotive boost converter is the boost converter used to interface the Li-Ion battery to the traction drive in the Toyota hybrid system. Boost converters are required for fuelcell vehicles as the voltage from the fuel cell varies significantly with load. The boost converters typically are relatively expensive and large in volume and mass due to the required magnetic component.

Conventional single-phase converters can be bulky and lossy and the three topologies presented in Fig. 1 are ways to help reduce the magnetic component and overall converter size. The two-phase (2L) interleaved design results in the reduction of input and output current ripple, thus allowing for smaller filter capacitors and ultimately smaller converters but the discrete inductors are typically made from high-Bsat lossy materials, such as silicon steel, amorphous metal or powdered iron.

The transformer-coupled design (XL) consists of a single input inductor along with a transformer that couples each phase. The XL approach can significantly improve magnetic efficiency by using low-loss low-Bsat ferrite for the coupled-inductor/transformer. Some outstanding issues associated with the XL design have been documented by Honda Motor Company and these include high inter-winding capacitance due to the large number of turns required to maintain the required magnetizing inductance, and issues with heat removal from the bifilar windings, especially when they were implemented using copper foil. Also, the high-dc bias input inductor allowed for significant size reduction but this comes at the expense of increased losses and cost when using powder or laminated cores. This loss was seen to affect the converter efficiency especially at low load conditions.

The integrated magnetic (IM) concept involves the integration of all magnetic components onto one single core. Various IM designs investigated to date can result in unconventional core geometries which are difficult to manufacture and mass produce. A paper published by Honda engineers M. Hirakawa, M. Nagano, Y. Watanabe, K. Andoh, S. Nakatomi, S. Hashino and T. Shimizu, "High Power DC/DC Converter using Extreme Close-Coupled Inductors aimed for Electric Vehicles", The 2010 International Power Electronics Conference - ECCE ASIA-, Japan, pp. 2941-2948, Jun. 2010, investigated a loosely coupled IM (EE IM) using an EE core set, as shown in Fig. 2, and compared it to the XL, but deemed it provided inferior operation due to its inherent large dc-inductance which increases the core size and volume. As an example of the prior art US patent number US 6,362,986, Sullivan *et al*, discloses an EE structure and variations of the EE structure.

It is therefore an object of the invention to provide an integrated magnetic structure to overcome at least one of the above mentioned problems.

### Summary of the Invention

According to the invention there is provided, as set out in the appended claims, an integrated magnetic structure, for use in a transformer coupled buck and/or boost converter, comprising a core having at least one leg portion and at least one phase winding split into two sub-windings, said two sub-windings are wound around the core and adapted to function as a single phase of a transformer.

In one embodiment the magnetic core is adapted such that the two sub-windings are positioned close to two sub-windings of another phase of the transformer to reduce external leakage flux.

The split-winding IM structure of the present invention has four main advantages: 1) provides inductor\transformer action, 2) minimizes external radiated fields, 3) provides controlled inductance paths, and 4) minimizes interphase capacitance.

In one embodiment there is provided two windings, each winding comprise an even number of turns and half the windings of each phase are wound equally on separate legs. The invention minimizes the external radiation by making each phase, A and B, have an even number of turns and placing half the windings of each phase equally on separate legs so that the external dc flux from one phase is cancelled by the dc flux from the other phase.

In one embodiment the magnetic core is optimized to allow for optimum heat extraction from the windings such that the phase windings are split in half and positioned close to the other phase in order to reduce external leakage flux.

In one embodiment the core is fabricated from two C and two T magnetic sections and adapted to cooperate with each other to provide a CCTT integrated magnetic structure. It will be appreciated that the core can be easily fabricated from two C and two T sections, hence the name. The CCTT IM is an improvement on the previous structures as it has minimal inter-winding capacitance due to the low number of turns. Low power loss ferrite is utilized for its construction which results in excellent efficiency when combined with low turns.

In one embodiment the core is fabricated from two C ferrite or magnetic sections to provide a CC integrated magnetic structure.

In one embodiment there is provided an electromagnetic shield adapted to control the ac field, such that the dc inductance remains unaffected.

In one embodiment the integrated magnetic comprises ferrite segments or poles in the area between the windings, said segments or poles are adapted to provide a controlled internal integrated leakage inductance. These poles additionally shield the windings from the leakage flux and minimize the ac power loss of the windings. Note that the phases may be interleaved in order to achieve additional control of the leakage and magnetizing inductances. Thus, the core's ability to contain the ac flux within the core window allows for a more controlled ac inductance when a shield is introduced, over more traditional IM designs. The dc inductance can be determined by evaluating an unshielded design while the ac inductance is determined by adding a shield to the design.

The magnetic core can be made of low-cost, low loss ferrite and this invention reduces cost and size, and improves efficiency compared to the competing approaches. Other magnetic materials can also be used and may be preferred depending on the design objectives.

This invention allows the use of low cost ferrite for the magnetic cores to replace the more expensive magnetic materials such as silicon steel or amorphous metal. The invention reduces the converter cost and increases the efficiency.

According to another embodiment of the present invention there is provided a buck and/or boost converter comprising an integrated magnetic structure, said structure comprising a first core portion having at least one leg portion and at least one phase winding split into two sub-windings, said two sub-windings are wound around the core portion and adapted to function as a first phase of a transformer;

a second core portion having at least one second leg portion and a second phase winding split into two sub-windings, said two sub-windings are wound around the second core portion and adapted to function as a second phase of a transformer; and wherein the two sub-windings of the first phase are positioned close to two sub-windings of the second phase of the transformer to reduce external leakage flux.

In one embodiment the first core portion and the second core portion are integrally formed to form a single magnetic core.

In one embodiment there is provided a boost converter comprising the integrated magnetic structure according to any of claims 1 to 7 and adapted to interface with a Li-Ion battery for use in an automotive system.

In one embodiment there is provided a boost converter comprising the integrated magnetic structure according to any of claims 1 to 7 and adapted to interface with a fuelcell for use in an automotive system.

## Brief Description of the Drawings

The invention will be more clearly understood from the following description of an embodiment thereof, given by way of example only, with reference to the accompanying drawings, in which:-

Figure 1 illustrates a prior art boost converter topology;
Figure 2 illustrates a prior art EE integrated magnetic core design;
Figure 3 illustrates a circuit representation of a CCTT IM boost converter according to one embodiment of the present invention;
Figures 4 & 5 illustrate the switching waveforms for duty cycles of less than and greater than 0.5 respectively of the CCTT IM boost converter circuit presented in Fig. 3;
Figure 6 illustrates two of the equivalent circuits of Fig. 3 for duty cycles greater than 0.5;
Figure 7 illustrates normalized input and phase current ripple for the CCTT IM boost converter of Fig. 3;
Figure 8 illustrates a CCTT integrated magnetic core according to one embodiment of the invention;
Figure 9 illustrates a 3D simulation of the CCTT integrated magnetic core of Fig. 8;
Figure 10 illustrates a CCTT IM design algorithm;
Figure 11 illustrates total CCTT IM volume vs. input current ripple;
Figure 12 illustrates the change in CCTT IM volume for varying input ripple and efficiency constraints;
Figure 13 illustrates sample waveforms during operation of the converter;

Figure 14 illustrates graph of converter efficiency versus input power; and

Figures 15 to 18 illustrate a number of 3D perspective views of the integrated magnetic core and windings according to various aspects of the invention.

## Detailed Description of the Drawings

Referring now to the invention in detail and initially Fig. 3 a CCTT IM boost converter is presented in Fig. 3, according to one embodiment of the invention. In this embodiment the IM is modelled using the familiar coupled inductor equations, as outlined in (1), where $V_{T1}$ and $V_{T2}$ are the phase winding voltages, $i_1(t)$ and $i_2(t)$ are the phase currents, $L_{self}$ is the self inductance. Due to the unity turns ratio, the mutual inductance $M$ is equal to the magnetizing inductance, $L_m$.

$$V_{T1} = L_{self}\frac{di_1}{dt} - M\frac{di_2}{dt}$$
$$V_{T2} = -M\frac{di_1}{dt} + L_{self}\frac{di_2}{dt} \qquad (1)$$

The converter operates at a constant or variable frequency, $f_s$, with period $T$.

The converter has a variable on-time, $t_{on} = DT$, where $D$ is the duty cycle of switches $Q_1$ and $Q_2$. In the circuit analysis of this converter, each phase is assumed to be symmetrical having the same leakage inductance, $L_{lk}$. The switches $Q_1$ and $Q_2$ are switched with a 180° phase delay and operate with the same duty cycle, $D$. Fig. 4 and Fig. 5 illustrate the switching waveforms for duty cycles of less than and greater than 0.5 respectively of the CCTT IM boost converter circuit presented in Fig. 3. There are four distinct modes of operation, for duty ratios of less than 0.5, where both phase switches are turned on alone or else are both off. Likewise, for duty ratios greater than 0.5, the four modes correspond to either both switches being on, so their on-times overlap, or when one switch is turned on alone.

Fig. 6 presents two of the equivalent circuits for duty cycles greater than 0.5. Subinterval 1 is equivalent to subinterval 3 while subinterval 4 is equivalent to subinterval 2. The input current ripple is triangular and due to converter symmetry has a frequency equal to twice the switching frequency. The input ripple is solely dependent on the leakage inductance of the CCTT IM. The phase current ripple is a combination of half the input ripple and half the magnetizing ripple. Equations (2), (3) and (4) present the input, magnetizing and phase current ripple for duty cycle less than 0.5. Equations (5), (6) and (7) show the input, magnetizing and phase current ripples for duty ratios greater than 0.5.

$$\Delta I_{in} = \frac{V_{in}\left[\left(\frac{D}{1-D}\right)(1-2D)\right]T}{L_{lk}} \qquad (2)$$

$$\Delta I_m = \frac{V_{in}\left[\left(\frac{D}{1-D}\right)\right]T}{2L_m + L_{lk}} \qquad (3)$$

$$\Delta I_{phase} = 0.5\left(\Delta I_{in} + \Delta I_m\right) \qquad (4)$$

$$\Delta I_{in} = \frac{V_{in}(2D-1)T}{L_{lk}} \qquad (5)$$

$$\Delta I_m = \frac{V_{in}}{2L_m + L_{lk}} \quad (6)$$

$$\Delta I_{phase} = 0.5\left(\Delta I_{in} + \Delta I_m\right) \quad (7)$$

The normalized input and phase current ripple for the CCTT IM boost converter is illustrated in Fig. 7. The current ripple is normalized to the peak value of the input current ripple at unity duty cycle. Firstly, if the magnetizing inductance is set to zero there is no transformer action taking place and the phase current ripple increases linearly with increasing duty ratio. As the magnetizing inductance is increased to a value of three times the leakage inductance, transformer action allows for a reduction in phase current ripple. As the magnetizing inductance is increased to 100 times the leakage inductance, it is possible to achieve phase current ripple cancellation at 0.5 *D.* In reality, very large values of magnetizing inductance are hard to achieve as a large number of turns would be required which would increase the overall size of the CCTT IM.

Figure 8 shows a preferred embodiment of the present invention, generally indicated by the reference numeral 10. In order to improve the coupling the CCTT IM has a split-winding design which allows for external dc flux cancellation. This minimizes the external dc inductance, as is shown in Fig. 8. Similar to the EE IM it uses ferrite poles in the window to shape the leakage flux and contain it within the CCTT IM core window. An additional advantage of these poles is that they help to reduce ac winding power loss associated with the ac flux by shielding the windings. In order to do this, the poles have to be extended beyond the winding as shown in Fig. 8.

Fig. 9 presents a 3D simulation of a CCTT IM design. The fringing flux is now concentrated around the pole region of the IM and there is reduced fringing from the core face directly above and below the windings. There is also reduced fringing from the windings.

In another aspect of the invention the calculation and estimation of fringing flux is important for the efficient design of magnetic components. Fringing estimation becomes critical when designing IM structures that contain large air gaps - especially when these magnetic devices need to be optimized to produce a controlled ac inductance. Estimation of the permeance of probable flux paths around the CCTT IM pole and windings is desirable. Once the permeance of the probable path is known it is easily converted to inductance by multiplying by the number of turns squared.

Fig. 10 illustrates a CCTT IM design algorithm. This algorithm has been developed to allow a user to generate an IM design. In this IM flow chart, the optimum IM solution is obtained based on various constraints according to the invention. The algorithm seeks a minimum IM volume where the IM core's basic dimensions are the variables. The algorithm can be implemented using a mathematical software package, for example Mathematica.

The IM algorithm is modular in structure and this allows for efficient prototyping and quick modification of an IM design. This modular structure allows each section to be modified or replaced depending on the users design requirements i.e. this flow chart uses a single-layer spiral winding in module (G) but this could be easily replaced with a module using foil or Litz wire. Likewise, conduction cooling is employed in this flow chart but this could be easily replaced by a free air convection cooling module. The algorithm consists of eight main modules (A) - (H) with the defined constraints in (I). (I) uses the FindMinimum function to find the minimum IM volume based on peak core and pole flux density, maximum allowable power loss, maximum allowable core and winding operating temperature, core width to thickness ratio and winding height and width. If the design conditions are met the algorithm proceeds to module (J). Module (J) uses the fringing equations, presented by Roters, to find the ac and dc inductance of the design. Module (K) compares the ac inductance to the required ac inductance. When this condition is satisfied the algorithm ends.

The CCTT IM size variation can be selected as a function of input current ripple, frequency and efficiency. Magnetic components are designed to be saturation or power limited, where the power loss limit is due to temperature rise or efficiency. In this analysis, ferrite 3C92 is the material of choice. All of the designs compared in this section share the same input data: $V_{in}$ = 155 V, $V_{out}$ = 420 V, $P_{in}$ = 80 kW. These designs inherently consider a 2 % phase current imbalance which also increases core size in a similar manner to the magnetizing current.

The cold-plate temperature is set at 70°C. The continuous operation temperature of 3C92 material is 140°C so the maximum allowable temperature rise for the core is 70°C. The core profile ratio, $r_c$, which is the ratio of the core thickness d and the core width a, is allowed to change within the range of 0.5 and 3. The maximum allowable temperature rise for the copper windings is 70°C. The magnetizing path air gap is limited to 3 mm in total divided into four separate air gaps.

The total CCTT IM volume vs. input current ripple is presented in Fig. 11. For this analysis, the switching frequency, $f_s$, remains constant at 25 kHz. The number of turns per phase is allowed to vary between 6 and 12 in increments of 2. The winding width and length are allowed to vary between 1 and 5 mm. The efficiency limit for the IM is set to be 99.7 %. The results show that for increasing current ripple and turns per phase, the total volume of the CCTT IM reduces. At low input ripple ratios, the volume increases sharply due to the increased energy storage requirements. Fig. 12 presents the change in CCTT IM volume for varying input ripple and efficiency constraints. The efficiency constraint is allowed vary between 99.7 - 99.9 %. The winding width and length is allowed vary between 1 - 20 mm as the power loss in the windings dominate over the core power loss. As the efficiency constraint increases the IM volume increases. As the efficiency constraint increases the winding area increases in order to reduce the winding power loss and this results in a larger CCTT IM volume.

Table III presents flow chart, 3D FEA and LCR test results for an eight turn CCTT IM design:

**TABLE III. Flowchart, 3D and Experimental CCTT IM Results**

| N | Flowchart | | 3D | | Experimental | |
|---|---|---|---|---|---|---|
| Phase | Ldc | Lac | Ldc | Lac | Ldc | Lac |
| | μH | μH | μH | μH | μH | μH |
| 8 | 9.8 | 8.5 | 9.6 | 8.4 | 9.8 | 8.8 |

The dc inductance was determined without a shield while the ac inductance was determined by placing an external shield with an open top around the IM core. A prototype CCTT IM was tested under the following conditions: $V_{in}$ = 155 V, $V_{out}$ = 420 V, $P_{in}$ = 80 kW and $f_s$ = 25 kHz. Sample waveforms are shown in Fig. 13. The top waveform in Fig. 13 is the phase current ripple while the second waveform is the magnetizing current ripple. The corresponding pole voltages are shown at the bottom.

The total measured converter efficiency versus input power is shown in Fig. 14. The converter power loss is largely due to the semiconductors. The CCTT IM efficiency was measured to be 99.7 % at full load.

Figures 15 to 18 illustrate a number of 3D perspective views of the integrated magnetic core and windings according to various aspects of the invention. Figure 15 illustrates a basic integrated magnetic structure, for use in a transformer coupled buck and/or boost converter, indicated generally by the reference numeral 20. A core 21 comprises at least one leg portion and at least one phase winding split into two sub-windings 22 and 23. The two sub-windings 22 and 23 are wound around the core and adapted to function as a single phase of a transformer. A 'N' phase split-winding integrated magnetic structure can be constructed using the basic primary component or cell illustrated in Figure 15 according to the invention as shown below with respect to Figures 16 to 18. This single phase or CT (one C and one T) cell has a split-winding design that allows for a reduction of the external dc and ac flux. The optional inclusion of two poles allows for flux shaping between the air gap.

In one embodiment of the invention there is provided a buck and/or boost converter comprising two phases using two basic primary components of Figure 15. Figure 16 illustrates a two phase integrated magnetic structure, indicated by the reference numeral 25 comprises a first core portion having at least one leg portion and at least one phase winding split into two sub-windings. The two sub-windings are wound around the core portion and adapted to function as a first phase of a transformer. A second core portion having at least one second leg portion and a second phase winding split into two sub-windings, said two sub-windings are wound around the second core portion and adapted to function as a second phase of a transformer. The first and second core portions can be joined together in a CCTT arrangement or placed in close to proximity to one another. The two sub-windings of the first phase are positioned close to two sub-windings of the second phase of the transformer to reduce external leakage flux.

When two of these CCTT IM single cells are joined together they form a CCTT IM. The core is constructed using two C and two T ferrite block sections. The differential flux path is through the main air gap while the common mode flux path is through the outer leg of the structure. It will be appreciated that the design of the present invention allows for a significant size reduction over a traditional EE IM solution. The size reduction is achieved due to the reduction in external fringing flux due to the split-winding configuration. It has also been shown that the majority of the ac leakage inductance is contained within the pole region of the structure. The structure shows a minimal reduction as leakage inductance when an external shield is introduced. Using the single cell it is possible to increase the number of phases.

Figure 17 and Figure 18 illustrate a three and four-phase solution respectively based on the basic cell construction of Figure 15. Reults of a sample three-phase design showed excellent performance with almost all of the ac leakage inductance contained within the pole region.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. An integrated magnetic structure, for use in a transformer coupled buck and/or boost converter, comprising a core having at least one leg portion and at least one phase winding split into two sub-windings, said two sub-windings are wound around the core and adapted to function as a single phase of a transformer.

2. The integrated magnetic structure as claimed in claim 1 wherein the magnetic core is adapted such that the two sub-windings are positioned close to two sub-windings of another phase of the transformer and adapted to reduce external leakage flux.

3. The integrated magnetic structure as claimed in claim 1 or 2 wherein each sub-winding of a single phase comprises an equal number of turns and wound on separate legs of the core.

4. The integrated magnetic structure as claimed in any preceding claim wherein the core is fabricated from two C and two T ferrite or magnetic sections and adapted to cooperate with each other to provide a CCTT integrated magnetic structure.

5. The integrated magnetic structure as claimed in any preceding claim wherein the core is fabricated from two C ferrite or magnetic sections to provide a CC integrated magnetic structure.

6. The integrated magnetic structure as claimed in any preceding claim comprising a shield adapted to control the ac field, such that the dc inductance remains unaffected.

7. The integrated magnetic structure as claimed in claim 6 wherein the structure comprises magnetic segments or poles in the area between the windings, said segments or poles are adapted to provide a controlled internal integrated leakage inductance.

8. A buck- boost converter comprising the integrated magnetic structure according to any of claims 1 to 7.

9. A boost converter comprising the integrated magnetic structure according to any of claims 1 to 7 and adapted to interface with a Li-Ion battery for use in an automotive system.

10. A boost converter comprising the integrated magnetic structure according to any of claims 1 to 7 and adapted to interface with a fuelcell for use in an automotive system.

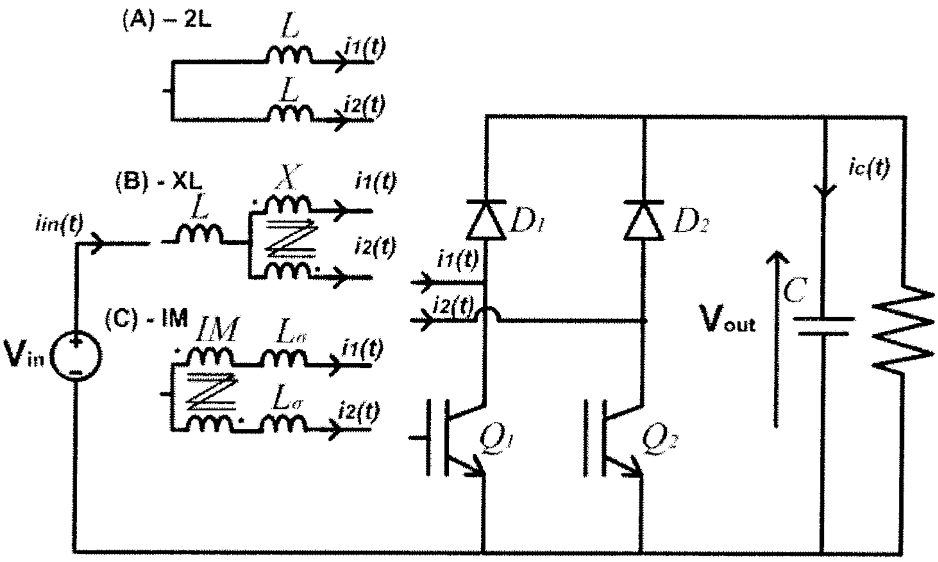


-PRIOR ART-

Figure 1

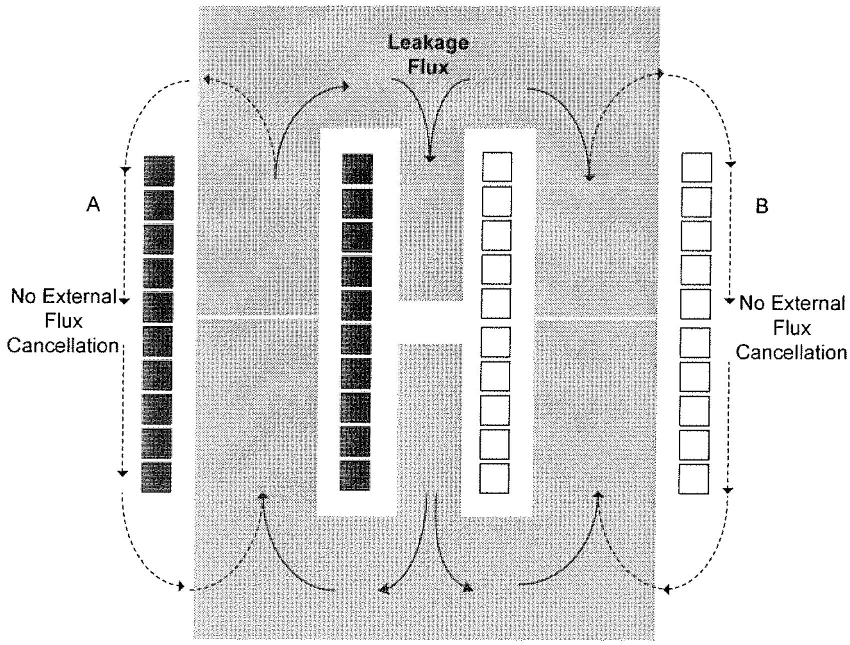


-PRIOR ART-

Figure 2

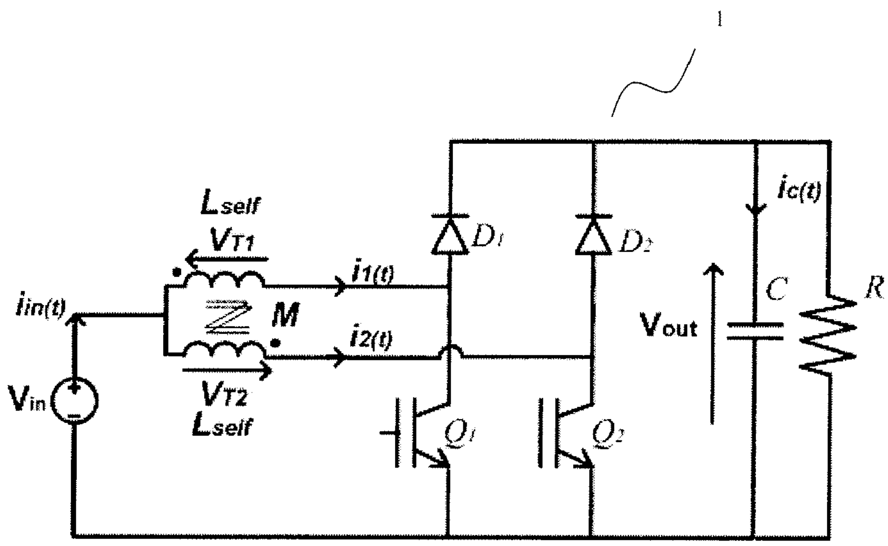


Figure 3

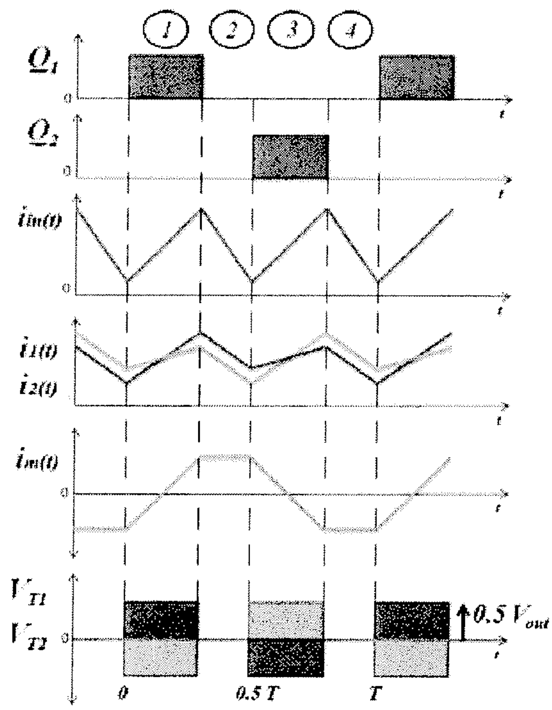


Figure 4

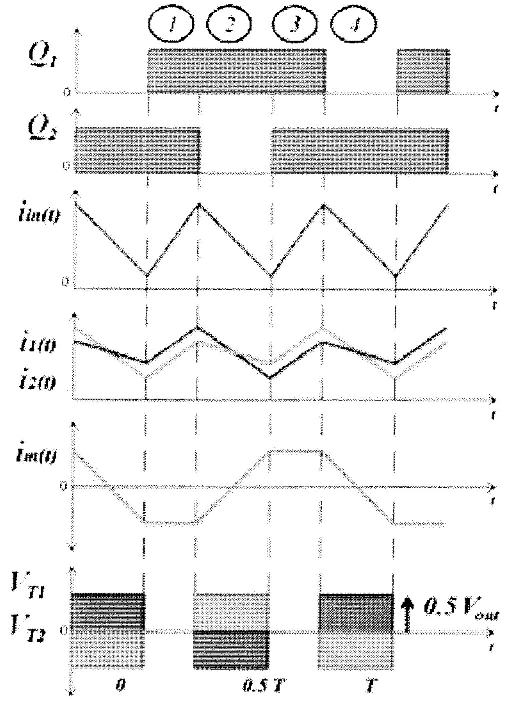


Figure 5

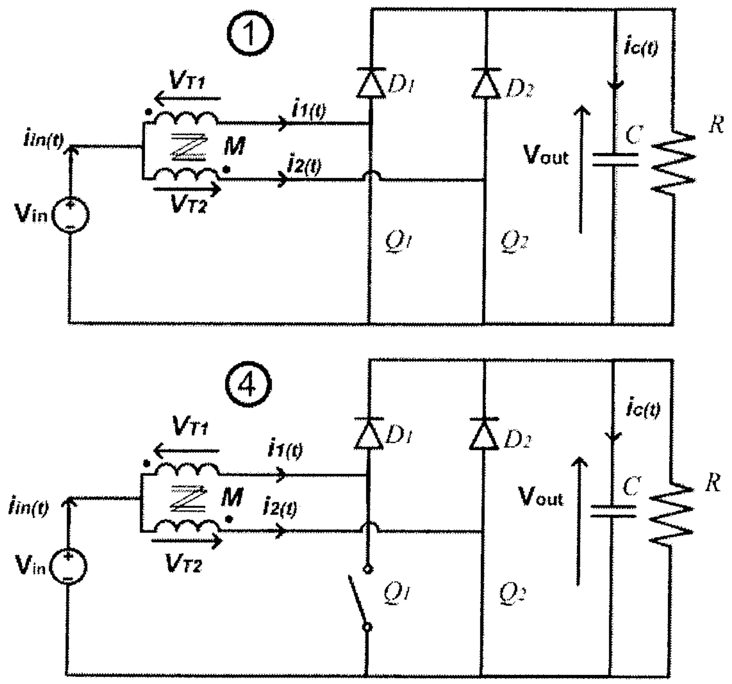


Figure 6

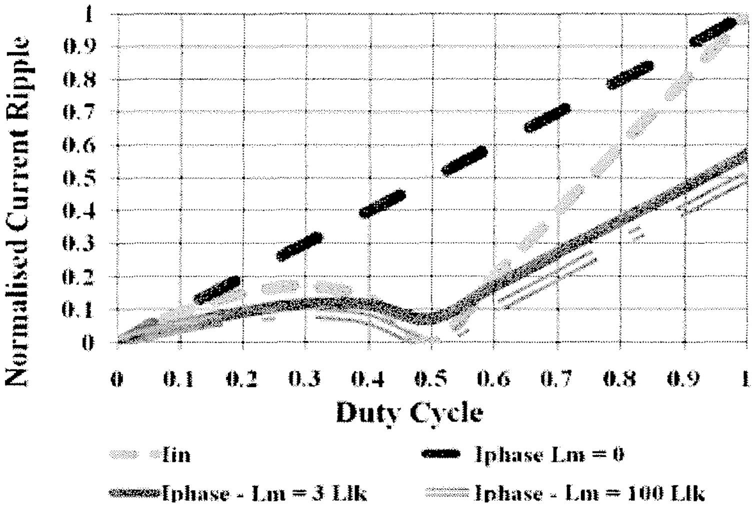


Figure 7

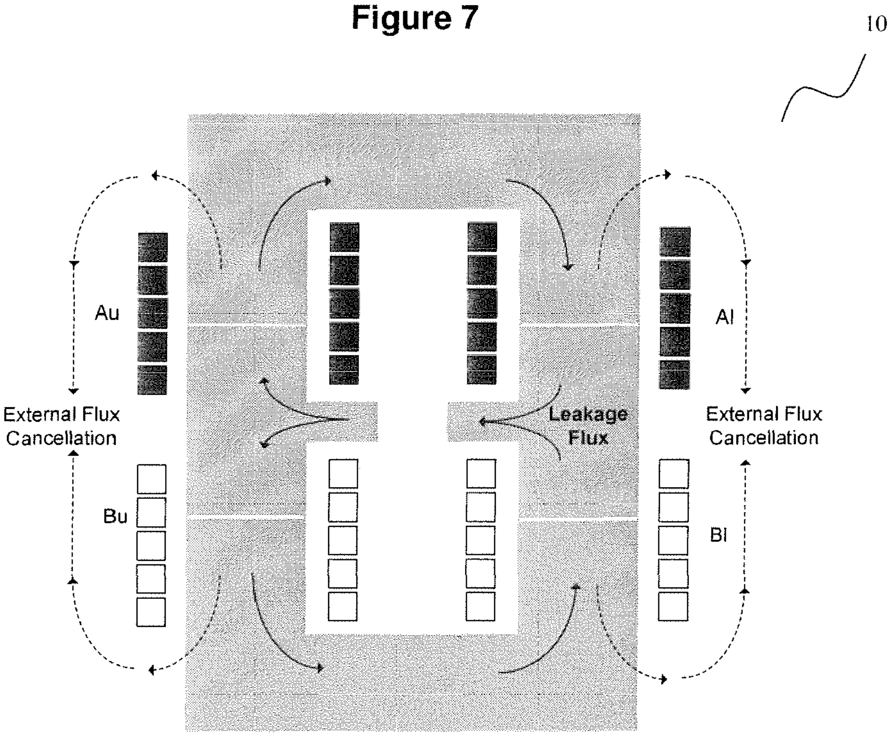


Figure 8

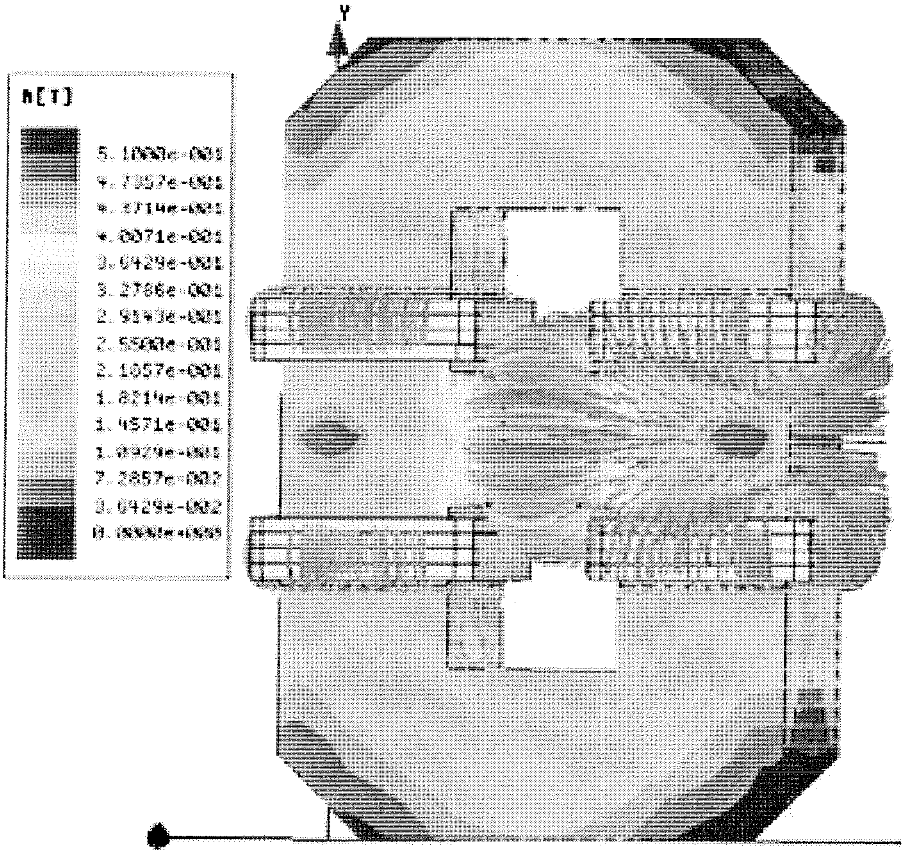
Y
B[T]
5.1000e-001
4.7357e-001
4.3714e-001
4.0071e-001
3.6429e-001
3.2786e-001
2.9143e-001
2.5500e-001
2.1857e-001
1.8214e-001
1.4571e-001
1.0929e-001
7.2857e-002
3.6429e-002
0.0000e+000

Figure 9

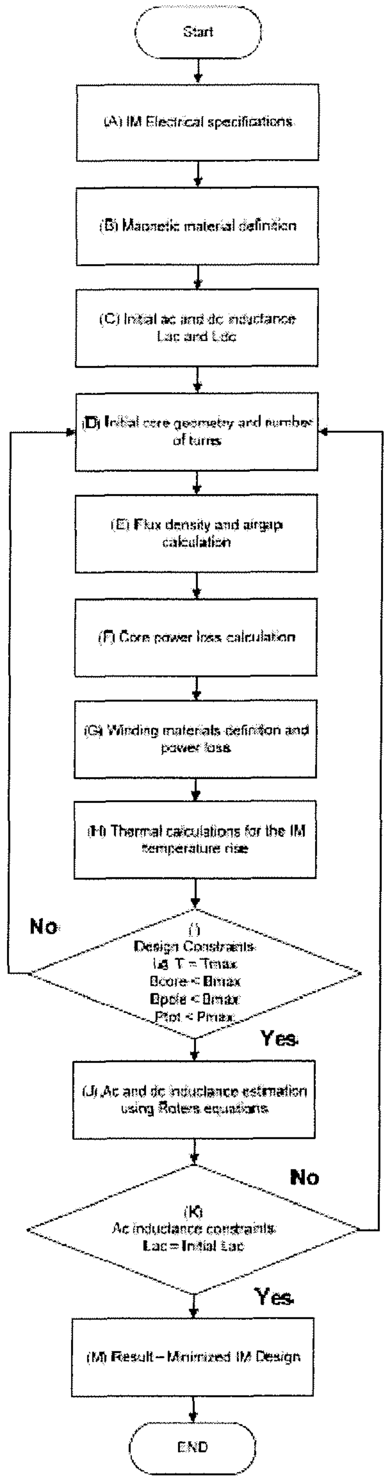
Start
(A) IM Electrical specifications
(B) Magnetic material definition
(C) Initial ac and dc inductance Lac and Ldc
(D) Initial core geometry and number of turns
(E) Flux density and airgap calculation
(F) Core power loss calculation
(G) Winding materials definition and power loss
(H) Thermal calculations for the IM temperature rise
(I)
Design Constraints
T = Tmax
Bcore < Bmax
Bpole < Bmax
Ptot < Pmax
No
Yes
(J) Ac and dc inductance estimation using Rotors equations
(K)
Ac inductance constraints
Lac = Initial Lac
No
Yes
(M) Result – Minimized IM Design
END

**Figure 10**

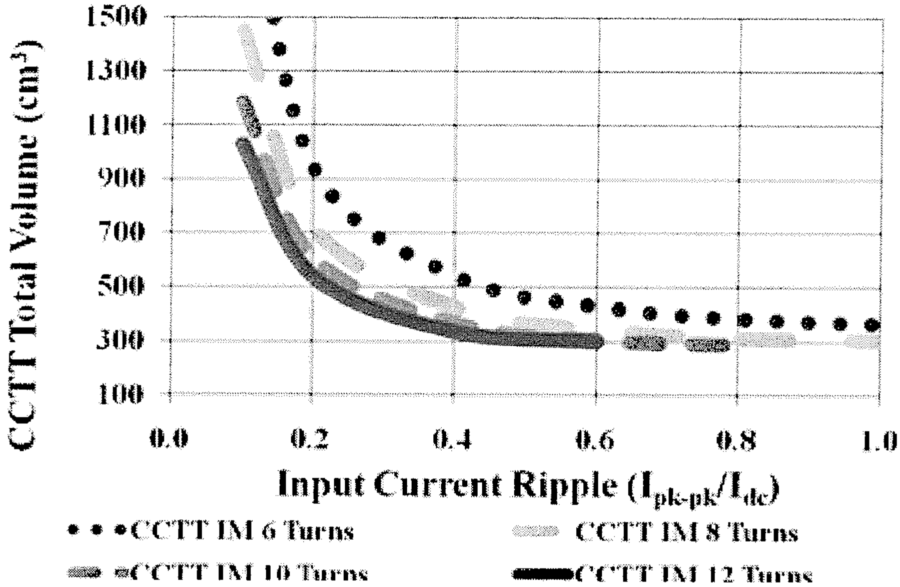


Figure 11

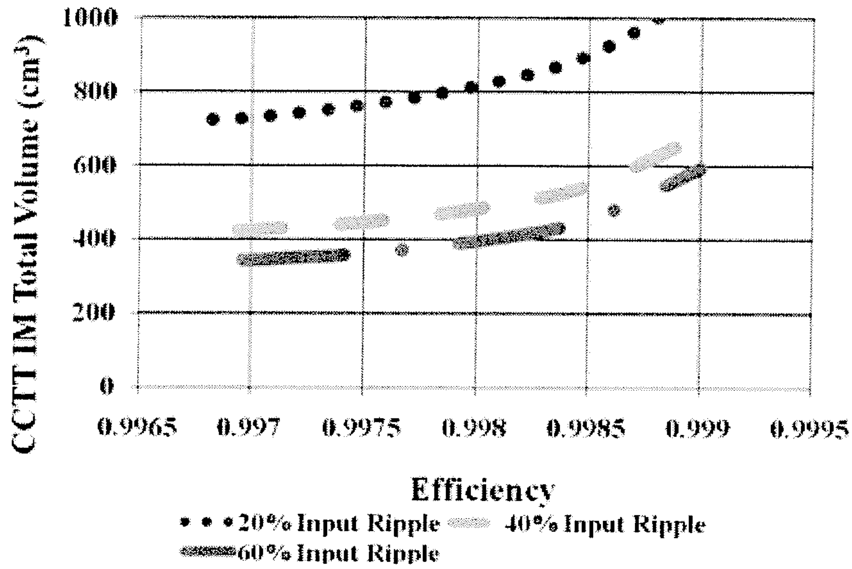


Figure 12

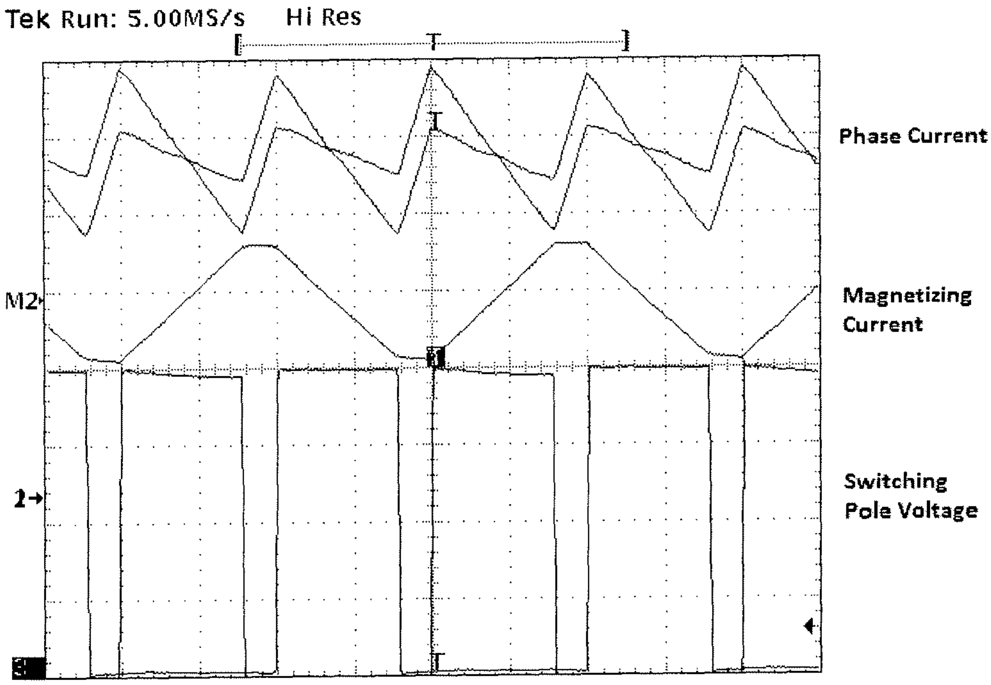


Figure 13

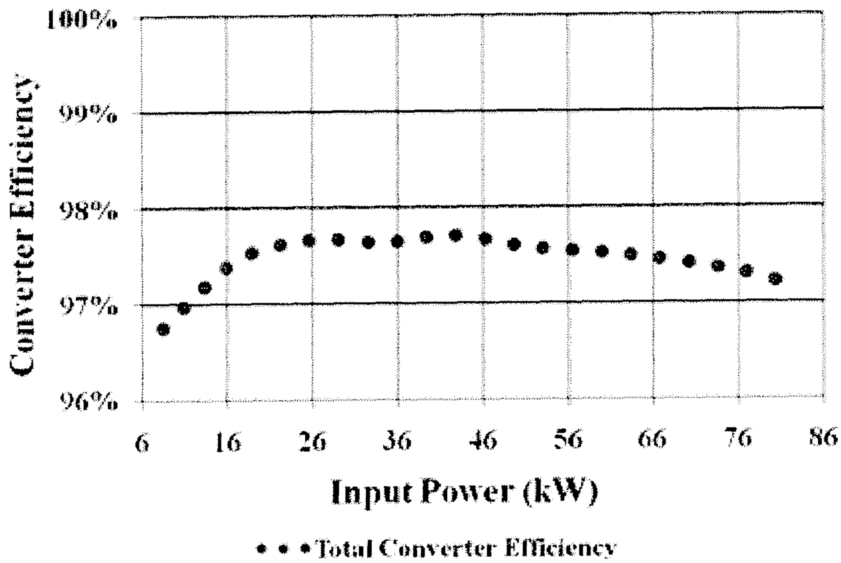


Figure 14

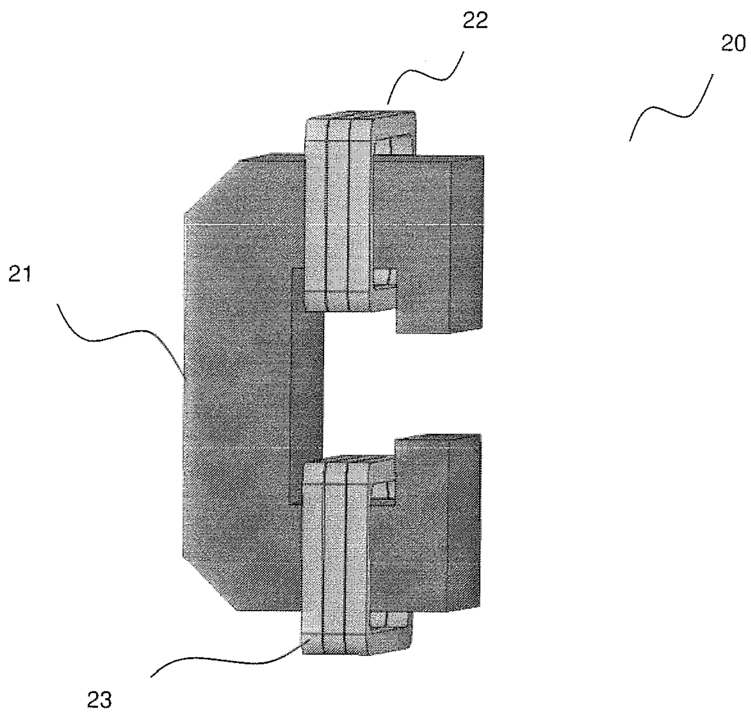


Figure 15

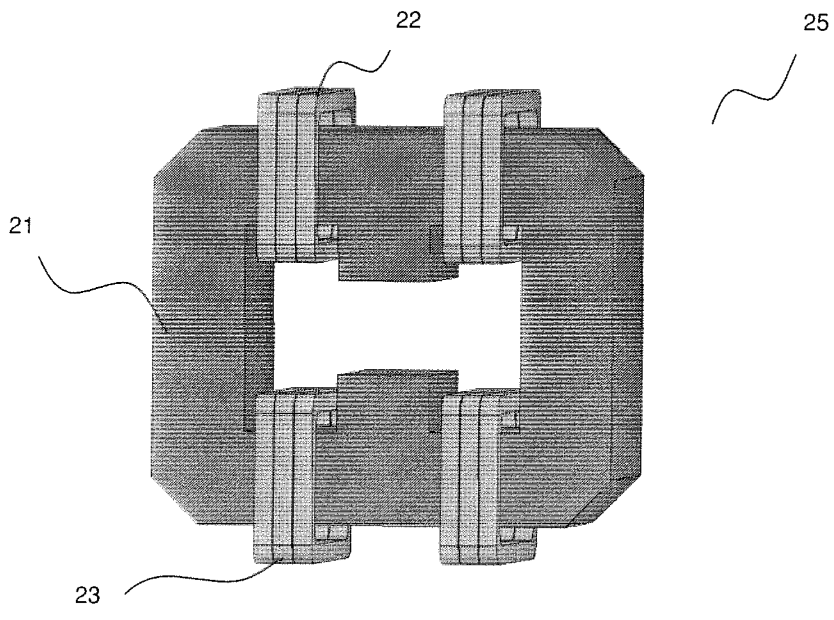


Figure 16

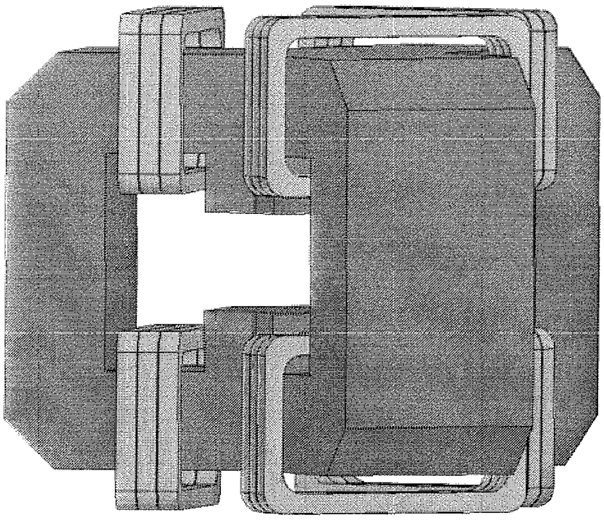

Figure 17

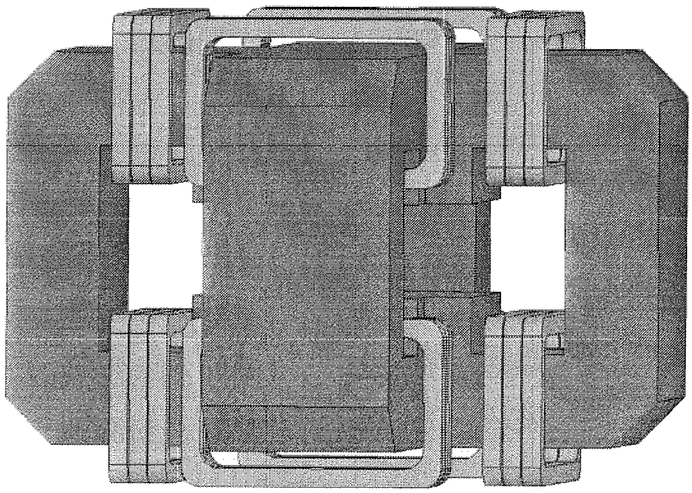

Figure 18

Europäisches Patentamt
European Patent Office
Office européen des brevets

## EUROPEAN SEARCH REPORT

Application Number
EP 11 17 9872

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/038650 A1 (MEHROTRA VIVEK [US] ET AL) 23 February 2006 (2006-02-23)<br>* abstract *<br>* paragraph [0005]; figure 1 *<br>* paragraphs [0009], [0025]; figure 4 *<br>----- | 1,3,6-10 | INV.<br>H01F38/02<br>H02M3/158 |
| X | US 2004/218404 A1 (YAN LIANG [US] ET AL) 4 November 2004 (2004-11-04)<br>* abstract *<br>* paragraph [0037]; figure 3 *<br>* paragraph [0004] *<br>----- | 1,3,6-8,10 | |
| X | US 2005/024179 A1 (CHANDRASEKARAN SRIRAM [US] ET AL) 3 February 2005 (2005-02-03)<br>* paragraph [0030]; figure 6 *<br>* paragraph [0024]; figure 2 *<br>----- | 1-3 | |
| X | US 2010/214052 A1 (BERKE WALTER M [US] ET AL) 26 August 2010 (2010-08-26)<br>* abstract; figures 1-3 *<br>* paragraphs [0004], [0012] - [0016] *<br>----- | 1,3,5 | TECHNICAL FIELDS SEARCHED (IPC) |
| X | US 2010/019874 A1 (MELANSON JOHN L [US] ET AL) 28 January 2010 (2010-01-28)<br>* figures 1,2 *<br>* paragraph [0007] *<br>* paragraphs [0018] - [0028] *<br>----- | 1,3,8 | H01F<br>H02M |
| A | M. HIRAKAWA, M. NAGANO, Y. WATANABE, K. ANDOH, S. NAKATOMI, S. HASHINO, T. SHIMIZU: "High Power DC/DC Converter using Extreme Close-Coupled Inductors aimed for Electric Vehicles",<br>THE 2010 INTERNATIONAL POWER ELECTRONICS CONFERENCE - ECCE ASIA-, JAPAN,<br>June 2010 (2010-06), pages 2941-2948, XP31727506,<br>* the whole document *<br>----- | 9,10 | |

The present search report has been drawn up for all claims

3

| Place of search | Date of completion of the search | Examiner |
|---|---|---|
| Munich | 7 December 2011 | Reder, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 17 9872

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2011

| Patent document cited in search report | Publication date | Patent family member(s) | Publication date |
|---|---|---|---|
| US 2006038650 A1 | 23-02-2006 | US 2006038650 A1 | 23-02-2006 |
| | | US 2008111657 A1 | 15-05-2008 |
| US 2004218404 A1 | 04-11-2004 | NONE | |
| US 2005024179 A1 | 03-02-2005 | NONE | |
| US 2010214052 A1 | 26-08-2010 | NONE | |
| US 2010019874 A1 | 28-01-2010 | CN 101635512 A | 27-01-2010 |
| | | CN 101635524 A | 27-01-2010 |
| | | CN 101651424 A | 17-02-2010 |
| | | CN 101707121 A | 12-05-2010 |
| | | CN 102165679 A | 24-08-2011 |
| | | EP 2313965 A1 | 27-04-2011 |
| | | TW 201009358 A | 01-03-2010 |
| | | TW 201009858 A | 01-03-2010 |
| | | TW 201012040 A | 16-03-2010 |
| | | TW 201014137 A | 01-04-2010 |
| | | TW 201106603 A | 16-02-2011 |
| | | US 2010019874 A1 | 28-01-2010 |
| | | US 2010020569 A1 | 28-01-2010 |
| | | US 2010020570 A1 | 28-01-2010 |
| | | US 2010020573 A1 | 28-01-2010 |
| | | US 2010020579 A1 | 28-01-2010 |
| | | WO 2010011559 A1 | 28-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6362986 B


### Non-patent literature cited in the description


- **M. HIRAKAWA ; M. NAGANO ; Y. WATANABE ; K. ANDOH ; S. NAKATOMI ; S. HASHINO ; T. SHIMIZU.** High Power DC/DC Converter using Extreme Close-Coupled Inductors aimed for Electric Vehicles. *The 2010 International Power Electronics Conference - ECCE ASIA-, Japan,* June 2010, 2941-2948